# EUROPÄISCHE PATENTSCHRIFT

(11) **EP 0 507 916 B1**
(45) Veröffentlichungstag und Bekanntmachung des Hinweises auf die Patenterteilung: **19.07.1995**
(21) Anmeldenummer: 91919227.8
(22) Anmeldetag: 23.10.1991
(51) Int. Cl.: B26D 7/26, B23D 35/00

(54) **UNTERSTÜTZUNGSEINRICHTUNG**
HOLDER MOUNTING
DISPOSITIF DE SUPPORT

(30) Priorität: 27.10.1990 DE 4034252
(43) Veröffentlichungstag der Anmeldung: 14.10.1992
(73) Patentinhaber: Maschinenfabrik GOEBEL GmbH, D-64210 Darmstadt (DE)
(72) Erfinder: SCHÜSSLER, Horst, D-6100 Rossdorf (DE)
(86) Internationale Anmeldenummer: DE9100826
(87) Internationale Veröffentlichungsnummer: WO9207693

(56) Entgegenhaltungen:
- EP-A- 0 333 001
- DE-A- 3 637 733

## Beschreibung

Die vorgeschlagenen Einrichtung bezieht sich auf das Stützen einer an einem Maschinengestell befestigbaren ersten Halteeinrichtung und eine in diese einsetzbare und an ihr verriegelbare oder von dieser trennbare, ein eine im wesentlichen kreisförmige Außenkontur aufweisendes Messer unterstützende zweite Halteeinrichtung.

Einrichtungen der vorbenannten Art werden üblicherweise dazu verwendet, um Substrate, beispielsweise relativ breite Bahnen aus Papier, Gewebe, Folie, Metall, Kunststoff oder dgl. in deren Laufrichtung zu bearbeiten, beispielsweise in im wesentlichen schmalere Streifen zu schneiden, zu perforieren oder dgl.. Nach dem Bearbeitungsvorgang laufen die erzielten Streifen einer weiteren Verarbeitungsmaschine zu, wie beispielsweise einer Wickelmaschine, in welcher die geschnittenen Streifen beispielsweise zu Rollen aufgewickelt werden. In vielen Fällen arbeitet das zum Schneiden, Perforieren oder dgl. benutzte Bearbeitungswerkzeug mit einem entsprechend gestalteten Gegenwerkzeug zusammen, beispielsweise das als Obermesser ausgebildete Bearbeitungswerkzeug mit im wesentlichen kreisförmiger Außenkontur mit einem entsprechenden Untermesser. Es ist jedoch ebenfalls möglich, daß das zu bearbeitende Substrat, beispielsweise eine Bahn aus Papier, einen drehbar gelagerten umlaufenden Zylinder teilweise umschlingt, wobei mindestens ein Obermesser das Substrat derart gegen den Zylinder andrückt, daß das Substrat dabei getrennt wird. Während des jeweiligen Bearbeitungsvorganges ist es notwendig, daß die an dem Bearbeitungsvorgang beteiligten Werkzeuge gut miteinander zusammenwirken, so daß ein gewünschtes Ergebnis des Bearbeitungsvorganges mit gewünschter Güte erzielt werden kann. Wenn beispielsweise bei einem sog. Scherenschnitt, der mit Kreismessern erzielt wird, mit einem oberen und einem unteren Kreismesser während des Schneidvorganges die zusammenwirkenden Schneiden nicht gut miteinander zusammenwirken, dann ergeben sich bei einer Bahn aus Papier beispielsweise unsauber geschnittene Kanten, die bei einem nachfolgenden Aufwickelvorgang der geschnittenen Streifen zu Schwierigkeiten führen könnnen. Ähnlich unerwünschte Folgen treten beispielsweise auch dann ein, wenn eine Bahn aus Papier, Folie, Gewebe, Kunststoff, Metall oder dgl. nicht sauber perforiert wurde. In der Fachwelt ist es üblich, daß mehrere Werkzeughalter auf einer Führung oder dgl. nebeneinander angeordnet gelagert werden, so daß aus einer zu bearbeitenden Bahn, einem Substrat etc. gleichzeitig mehrere zunächst nebeneinander liegende Streifen herausgearbeitet werden.

Damit die Werkzeuge zum Bearbeiten des in Rede stehenden Substrates während des Bearbeitungsvorganges gut ausgerichtet werden, werden die Bearbeitungswerkzeuge üblicherweise in sog. Halter eingesetzt, wobei die Halter ihrerseits in die Bearbeitungsmaschine eingesetzt und in dieser befestigt werden. Ein solcher Halter ist beispielsweise aus der EP-A 0 333 001 vorbekannt. Dieser Halter besteht im wesentlichen aus einer ersten Halteeinrichtung, die in das Gestell der übrigen Maschine eingesetzt und daran befestigt werden kann. In diese erste Halteeinrichtung wird eine zweite Halteeinrichtung eingesetzt oder von ihr entnommen, wobei das Bearbeitungswerkzeug in Form eines Kreismessers, Perforiermessers oder dgl. seinerseits in die zweite Halteeinrichtung eingesetzt und an dieser befestigt ist. Auf diese Weise läßt sich das Bearbeitungswerkzeug bei Bedarf relativ einfach aus dem genannten Halter entnehmen und durch ein anderes ersetzen. Die erste und zweite Halteeinrichtung des vorbekannten Halters sind jedoch derart ausgebildet, daß das jeweilige Messer beidseitig, d.h. zu beiden Seiten seiner beiden Stirnseiten drehbar unterstützt wird. Diese Konstruktionsweise bedeutet, daß der Halter für das Bearbeitungswerkzeug in Richtung der geometrischen Achse, d. h. der Drehachse des Bearbeitungswerkzeuges insgesamt relativ große Abmessungen aufweist. Andererseits kann der Abstand einzelner nebeneinander in der Maschine angeordneter Messer minimal nur so klein werden, wie die Baugröße des Halters es zuläßt. Da der aus der EP-A 0 333 001 vorbekannte Halter in axialer Richtung des Messers relativ breit konstruiert ist, können aufgrund seiner Abmessungen mit diesem Halter nur relativ breite Streifen aus dem zu bearbeitenden Substrat herausgeschnitten werden. In Anbetracht der vorliegenden Problematik soll nun eine Einrichtung geschaffen werden, die in axialer Richtung der Bearbeitungswerkzeuge weniger Platz benötigt, d. h., mit der schmalere Streifen aus einer zu bearbeitenden Bahn, die aus Papier, Folie, Metall oder dgl. bestehen kann, herausgearbeitet werden können. Die Lösung der Aufgabe erfolgt durch eine Unterstützungseinrichtung nach Anspruch 1. Weitere Einzelheiten ergeben sich aus den abhängigen Ansprüchen. Durch die vorgeschlagene Lösung ist es möglich, den einzelnen Messerhalter schmaler auszubilden, so daß dann, wenn mehrere derartige Messerhalter in der das Substrat zu bearbeitenden Maschine nebeneinander angeordnet sind, diese Messerhalter dichter aneinandergerückt werden können. Auf diese Weise können beispielsweise schmalere Streifen aus einer zu bearbeitenden Bahn, die aus Papier, Folie, Textilien, Metall oder dgl. bestehen kann, herausgearbeitet werden, so daß auch diese Streifen in einem späteren Bearbeitungsvorgang beispielsweise zu Rollen aufgewickelt werden können. Daneben wird es ermöglicht, daß das jeweilige Bearbeitungswerkzeug ohne Zuhilfenahme eines weiteren Werkzeuges schnell und einfach aus der Maschine und d. h. auch aus dem jeweiligen Halter herausgenommen und durch ein anderes ersetzt werden kann. Außerdem ist es möglich, daß das Bearbeitungswerkzeug auch außerhalb der in Rede stehenden Bearbeitungsmaschine während eines weiteren Bearbeitungsvorganges gut nachgebessert werden kann. Die Bearbeitungsmaschine kann währenddessen mit anderen Messern weiterarbeiten. Beispielsweise besteht das Nachbessern in einem Nachschleifen und anschließendem Justieren wenn das Messer während eines vorangegangenen Bearbeitungsvorganges stumpfgeworden sein sollte. Anschließend kann das herausgenommene Messer beispielsweise in einem weiteren Arbeitsvorgang, ebenfalls während die übrige Maschine weiterläuft, in einem Simulator oder einer ähnlichen Einrichtung für einen folgenden späteren Bearbeitungsvorgang neu eingestellt werden. Wenn diese Einstellung während des Laufens der Maschine erfolgen kann, dann kann die Maschine während des zeitaufwendigen Nachstell- und Schleifvorganges weiter produzieren, ohne daß etwa Stillstandzeiten für die Maschine entstünden. Nach Abschluß der Pflegearbeiten, wie beispielsweise neu anschleifen und nachjustieren, kann das durch die Pflegearbeiten wieder hergerichtete Messer auf kürzestmögliche Weise derart wieder in den Halter und damit auch in die übrige Maschine eingesetzt werden, daß sich nur sehr kurze Stillstandszeiten, also Produktionsausfälle für die Maschine ergeben und daß sich darüber hinaus das Messer auf leichte, bequeme und schnelle Weise derart in den Halter und damit die übrige Maschine einsetzen läßt, daß es gegenüber der übrigen Maschine optimal eingestellt ist. Diese optimale Einstellung kann beispielsweise in der guten Ausrichtung eines Obermessers zu dem mit ihm zusammen das Substrat bearbeitenden Untermesser bestehen. Weitere Merkmale und Vorteile ergeben sich aus der nachfolgenden Beschreibung eines Ausführungsbeispieles.

Anhand des in den beigefügten Figuren schematisch abgebildeten die Erfindung nicht begrenzenden Ausführungsbeispieles wird die vorgeschlagene Einrichtung näher erläutert. In den Figuren sind in dem vorliegenden Zusammenhang nicht wesentliche dem Fachmann hinreichend bekannte Einzelheiten wegen einer übersichtlicheren Darstellungsweise nicht dargestellt. In den Figuren sind deshalb nur diejenigen Teile dargestellt, die zur näheren Erläuterung der vorgeschlagenen Einrichtung und ihrer Vorteile erforderlich sind.

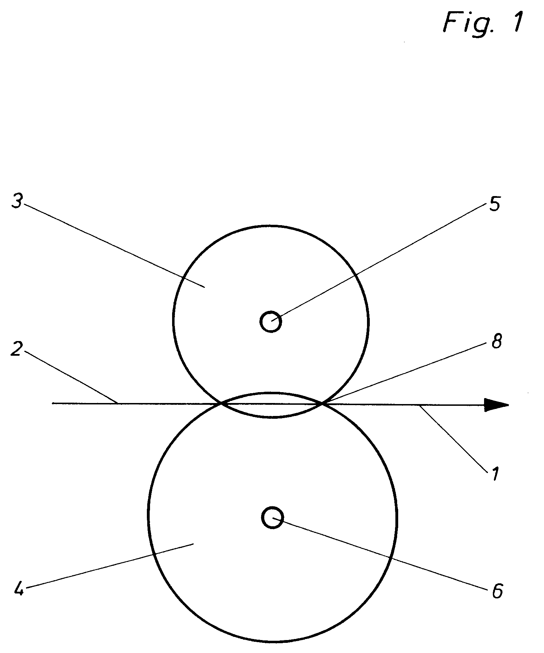

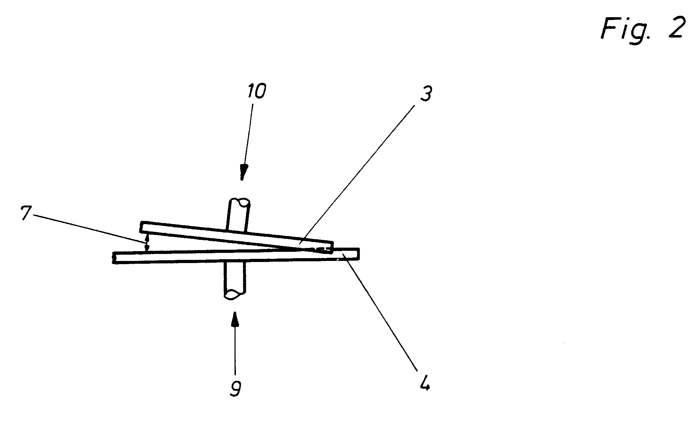

Die einzelnen Figuren bedeuten:
- Fig. 1:: Längsschneideinrichtung
- Fig. 2:: Draufsicht auf Fig. 1

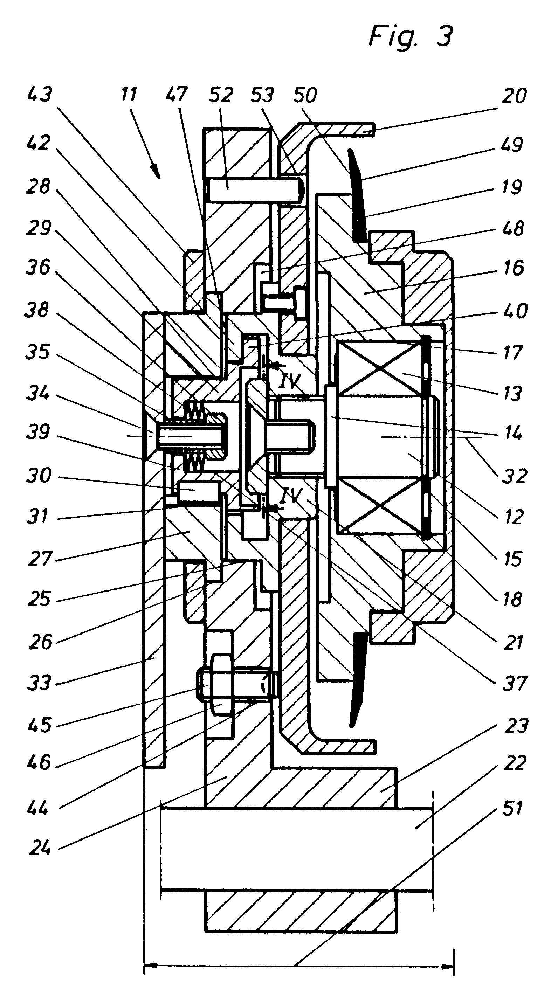

- Fig. 3:: Schnittbildliche Darstellung
- Fig. 4:: Ansicht in Richtung IV - IV in Fig. 3 in anderem Maßstab als Fig. 3
Eine in Streifen 1 zu zerteilende Bahn 2, ein sog. Substrat aus Papier, Folie, Gewebe, Kunststoff, Metall oder dgl. durchläuft eine Schneideinrichtung, die aus mindestens einem Paar von Untermessern und Obermessern besteht. Beispielsweise hat die Schneideinrichtung ein Obermesser 3 und ein Untermesser 4. Mehrere derartige Messerpaare können aber auch in Blickrichtung der Fig. 1 hintereinander angeordnet sein. Das Obermesser 3 wird durch eine Welle 5 und das Untermesser 4 durch eine Welle 6 drehbar unterstützt. Dies kann dadurch erfolgen, daß die Wellen 5 und 6 über die gesamte Breite der in Streifen 1 zu schneidenden Bahn 2 reichen und drehbar in einem nicht gezeigten Maschinengestell gelagert sind. Es ist jedoch vorteilhaft, die Messer, und hier oftmals nur das jeweilige Obermesser, in jeweils einem separaten Halter drehbar zu lagern, wobei diese Halter in dem Gestell der Maschine befestigt sind. Ein solcher Halter geht beispielsweise aus der eingangs näher bezeichneten Vorveröffentlichung hervor. Die Obermesser 3 und die Untermesser 4 sind jeweils einander schräg zugeordnet, so daß in der Draufsicht nach Fig. 2 ein Winkel 7 zwischem dem Ober- und dem Untermesser entsteht, so daß - zumindest in seiner Theorie - ein Punkt 8 entsteht, an dem Ober- und Untermesser miteinander in Berührung stehen. Der Punkt 8 ist der sog. Schneidpunkt, der jedoch in Wirklichkeit kein Punkt im mathematischen Sinne ist, da die beteiligten Maschinenteile 3 und 4 geringfügig durch die auf die Messer wirkenden Kräfte abgeplattet werden. Auf das Untermesser wirken beispielsweise Kräfte in Richtung des Pfeiles 9, während die auf das Obermesser 3 wirkenden Kräfte in Richtung des Pfeiles 10 wirken, so daß sie am Schneidpunkt 8 gegeneinanderwirken. Auf diese Weise entsteht ein scherenartiger Schnitt, der wegen der Kräfte und der Elastizität der Messer wie bei einer Schere eine kleine Schneidfläche ergibt. Analoge Verhältnisse ergeben sich bei anderen Bearbeitungsarten wie beispielsweise der des Perforierens.

Wenn die an der Bearbeitung des Substrates, d. h. der Bahn 2 beteiligten Werkzeuge mit jeweils einem Halter, d. h. einer Unterstützungseinrichtung in der übrigen Maschine gelagert sind, dann ist in der Unterstützungseinrichtung 11 beispielsweise eine im wesentlichen stillstehende Achse 12 gelagert, die zu der Welle 5 analog ist. Analoges gilt hinsichtlich der Welle 6, wenn das entsprechende Unterwerkzeug ebenfalls in einem separaten Halter gelagert sein sollte. Auf der Achse 12 ist ein Lager 13, beispielsweise ein Wälzlager mit Hilfe eines sog. Wellenabsatzes 14 und beispielsweise eines Sicherungsringes 15 befestigt. Durch das Lager 13 wiederum wird eine Nabe 16 unterstützt, derart, daß eine Ausdrehung 17 der Nabe 16 das Lager 13 aufnimmt und diesem auch als Anschlag dient. Ein weiterer Sicherungsring 18 verhindert, daß die Nabe 16 den durch das Lager 13 gegebenen Sitz der Nabe verlassen kann. Auf der Nabe 16 ist ein beliebiges Bearbeitungswerkzeug 19 auf beliebige Weise befestigt. Das Bearbeitungswerkzeug 19 hat im wesentlichen eine kreisförmige Außenkontur, so daß es beispielsweise ein Kreismesser oder ein kreisförmiges Perforiermesser ist, mit dem die Bahn 2 bearbeitet werden kann. Auf der Achse 12 ist daneben eine Seitenwand 20 derart befestigt, daß sie sich gegenüber der Achse 12 nicht drehen kann. Mit der Seitenwand 20 ist ein zweites Kupplungsteil 21 verbunden. Auf diese Weise stellen die Teile 12 bis 18, sowie 20 und 21 eine zweite Halteeinrichtung zum Halten des Bearbeitungswerkzeuges 19 dar.

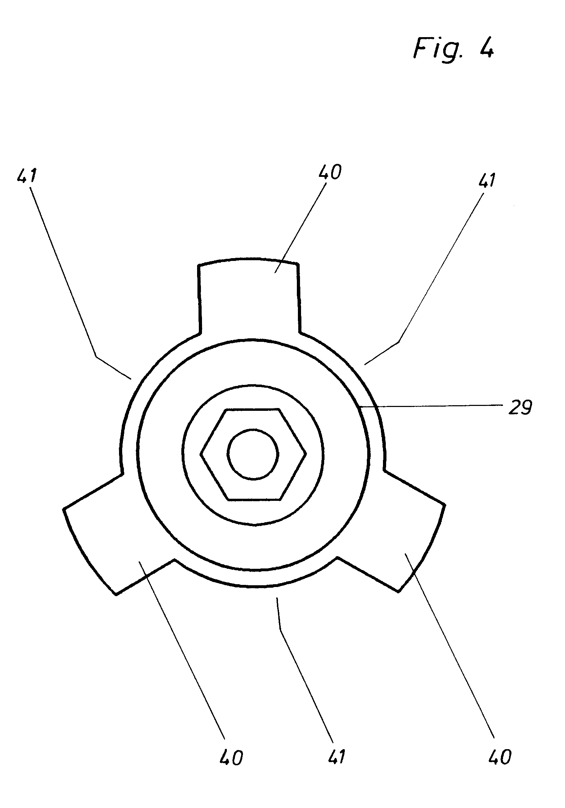

In Ergänzung hierzu besteht eine entlang einer in dem Gestell der Einrichtung befestigten, quer über die Bahn 2 reichenden Führung 22 beispielsweise verschiebbare erste Halteeinrichtung aus einem Schlitten 23 oder dgl., der gegenüber der Führung 22 verschoben und bei Bedarf gegenüber dieser an beliebiger Stelle festgestellt werden kann. Außerdem enthält die erste Halteeinrichtung einen Arm 24, der an dem Schlitten 23 befestigt ist. Der Arm 24 enthält eine Bohrung 25, in welche das zweite Kupplungsteil 21 eingesetzt werden kann. Außerdem enthält der Arm 24 eine Stufenbohrung 26, in welche ein Zentrierteil 27, das eine kreisförmige Außenkontur hat, eingesetzt ist. Das Zentrierteil 27 enthält eine Bohrung 28, in welche ein erstes Kupplungsteil 29 eingesetzt ist. Das erste Kupplungsteil 29 ist mit einer Paßfeder oder dgl. 30 versehen. Diese Paßfeder greift in eine Nut 31 ein, die in das Zentrierteil 27 eingearbeitet ist. Auf diese Weise folgt das erste Kupplungsteil 29 einer Drehbewegung des Zentrierteils 27, kann sich jedoch in Richtung der geometrischen Achse 32, die zugleich Symmetrieachse des Bearbeitungswerkzeuges 19 ist, gegenüber dem Zentrierteil 27 verschieben. An dem Zentrierteil 27 ist daneben ein Schwenkhebel 33 befestigt. In den Schwenkhebel 33 ist eine Schraube 34 eingesetzt, die eine Hülse 35 unterstützt. Die Hülse 35 wird mit Hilfe einer Mutter 36, die in die Schraube 34 eingreift, gegen den Schwenkhebel 33 gedrückt und damit an diesem befestigt. Das erste Kupplungsteil 29 ist im wesentlichen ein Drehteil, d. h. im wesentlichen kreisrund und enthält eine Bohrung 37. Diese Bohrung ist derart bemessen, daß eine oder mehrere Tellerfedern 38 zwischen die Hülse 35 und das erste Kupplungsteil 29 sowie zwischen die Mutter 36 und eine Andrehung 39 des ersten Kupplungsteiles 29 eingesetzt werden können. An das erste Kupplungsteil 29 sind Klauen 40 angearbeitet, so daß sich für das erste Kupplungsteil 29 eine im wesentlichen glockenartige Gestalt ergibt. Die Klauen 40 wechseln in Umfangsrichtung mit Lücken 41 ab, wie dies aus Fig. 4 zu ersehen ist. Beispielsweise sind die Klauen über den Umfang des ersten Kupplungsteiles 29 verteilt angeordnet. Somit gehören die Teile 27 bis 31 und 33 bis 41 zur ersten Halteeinrichtung. Die erste und die zweite Halteeinrichtung ergeben zusammen die Unterstützungseinrichtung für das Bearbeitungswerkzeug 19. In entsprechender Weise sind Klauen 42 mit dem zweiten Kupplungsteil 21 verbunden oder bestehen mit diesem zusammen aus einem einzigen Bauteil. Die Klauen beider Kupplungsteile sind in Umfangsrichtung dieser Kupplungsteile gesehen etwas kleiner als die zwischen ihnen jeweils befindlichen Lücken. Auf diese Weise können beispielsweise die Klauen 42 bei entsprechender Drehstellung des Zentrierteils 27 durch die zwischen den Klauen 40 des ersten Kupplungsteiles bestehenden Lücken 41 hindurchtreten. Eine solche Drehstellung des Zentrierteiles 27 kann durch Verschwenken des Schwenkhebels 33 erzielt werden.

Daneben ist an der ersten Halteeinrichtung ein Sicherungsdeckel 43 befestigt, der verhindert, daß sich das Zentrierteil 27 von dem Arm 24 lösen könnte. Außerdem ist in den Arm 24 eine Gewindebohrung 44 eingearbeitet. In die Gewindebohrung 44 ist eine Schraube 45 eingeschraubt, die ihrerseits mit Hilfe einer Mutter 46 an einer nichtbeabsichtigten Drehung gehindert werden kann. Die Schraube 45 durchgreift den Arm 24 derart, daß sie mit der Seitenwand 20 in Berührung kommt und einen Anschlag für die zweite Halteeinrichtung bildet. Auf diese Weise kommt die Seitenwand 20 gegenüber der Schraube 45 zur Anlage und liegt daher damit auch gegen den Arm 24 an. Mehrere derartige Schrauben können in der vorgeschlagenen Einrichtung über den Umfang des Bearbeitungswerkzeuges regelmäßig oder unregelmäßig verteilt vorgesehen sein. Auf diese Weise entsteht eine eindeutige Ausrichtung und Zuordnung der zweiten Halteeinrichtung gegenüber der ersten Halteeinrichtung. Ferner befindet sich ein erster Freiraum 47 zwischen dem zweiten Kupplungsteil 21 und dem Zentrierteil 27. Daneben besteht ein zweiter Freiraum 48 zwischen dem zweiten Kupplungsteil 21 und dem Arm 24. Auf diese Weise entsteht genügend Platz dafür, daß die Tellerfedern 38 Kräfte in Richtung der geometrischen Achse des Bearbeitungswerkzeuges ausüben können, und zwar derart, daß die zweite und die erste Halteeinrichtung gegeneinandergedrückt werden und miteinander in Berührung kommen. Diese Kräfte werden von den Tellerfedern 38 ausgehend über das erste Kupplungsteil 29 und dessen Klauen 40 auf die Klauen 42 des zweiten Kupplungsteiles 21 übertragen und damit auch auf die Achse 12 und alles das, was auf der Achse 12 befestigt ist. Außerdem sind die Freiräume 47 und 48 derart bemessen,
daß eine Bedienungsperson die zweite Halteeinrichtung 20 ohne Zuhilfenahme eines weiteren Werkzeuges mit seiher Hand ergreifen, gegen die zweite Halteeinrichtung drücken und den Schwenkhebel 33 um die Achse 32 derart verdrehen kann, daß die Klauen 40 und 42 der beiden Kupplungsteile außer Eingriff geraten. Dies ist insbesondere dann möglich, wenn der Schwenkhebel 33 in eine dafür günstige Stellung verschwenkt worden ist. Diese günstige Öffnungsstellung ist beispielsweise dann gegeben, wenn sich die Schwenkstellung des Armes 33 mit der Erstreckungsrichtung des Armes 24 im wesentlichen nicht deckt. Ensprechendes gilt in umgekehrter Richtung beim Einsetzen einer neuen zweiten Halteeinrichtung mit einem entsprechend neu vorbereiteten Bearbeitungswerkzeug. Dadurch, daß das Bearbeitungswerkzeug 19 nur an einer seiner beiden Stirnseiten 49 und 50 von der ersten Halteeinrichtung, d. h. im wesentlichen von dem Arm 24 und alles was an diesem befestigt ist unterstützt wird, entsteht eine einseitige oder sog. fliegende Lagerung für das Bearbeitungswerkzeug 19 und damit auch für die zweite Halteeinrichtung. Eine derartige Konstruktionsweise führt zu einer Erstreckung der gesamten Unterstützungseinrichtung in Richtung der geometrischen Achse des Bearbeitungswerkzeuges, d. h. in Richtung der geometrischen Achse 32, die mit dem Maß 51 angegeben ist. Dieses Maß 51 kann dadurch, daß durch die fliegende Lagerung nur ein Arm 24 vorgesehen ist, relativ schmal gehalten werden und ist somit schmaler als das entsprechende Maß der vorbekannten Einrichtung. Auf diese Weise lassen sich die Bearbeitungswerkzeuge entsprechend dichter aneinanderrücken und damit entsprechend schmalere Streifen aus einer Bahn ausschneiden. Entsprechendes gilt für Perforier- und andere Werkzeuge wenn andere Bearbeitungsarten durchgeführt werden sollen. Die Schraube 45 braucht im allgemeinen nur einmal - bei Montage der Unterstützungseinrichtung in die übrige Maschine - eingestellt zu werden. Auf diese Weise können mehrere zweite Halteeinrichtungen wahlweise in dieselbe erste Halteeinrichtung eingesetzt werden. Dabei ergibt sich bei entsprechend gewählter Befestigungsweise in jedem Fall und für jede zweite Halteeinrichtung die gleiche Position gegenüber der ersten Halteeinrichtung und damit auch gegenüber der übrigen Maschine. Wenn zudem das Bearbeitungswerkzeug in einem Simulator oder dgl. außerhalb der Maschine - und während die Maschine mit einer gleichen oder analogen weiteren zweiten Halteeinrichtung einschließlich eines zugehörigen weiteren Bearbeitungswerkzeuges weiterläuft, also in Produktion ist - so eingestellt und in der zweiten Halteeinrichtung befestigt wird, daß die Bearbeitungskante - wie z. B. die Schneide - des Bearbeitungswerkzeuges 19 eine bestimmte und voraussehbare Position zu der Seitenwand 20 einnimmt, dann kommt die Bearbeitungskante des Bearbeitungswerkzeuges auch nach Austausch der zweiten Halteeinrichtung in die gleiche Position, die ein weiteres analoges Bearbeitungswerkzeug in einer weiteren analogen zweiten Halteeinrichtung bei einem früheren Produktionsvorgang einnahm. Damit wird die Voraussetzung verständlich, daß die Befestigungseinrichtung, mit der das Bearbeitungswerkzeug 19 gegenüber der Nabe 16 befestigt wird, entsprechend ausgebildet sein muß. Eine Korrektur dieser Befestigung wird beispielsweise dann erforderlich sein, wenn die Schneide des Bearbeitungswerkzeuges, beispielsweise eines Kreismessers, infolge Nachschleifens gegenüber dem übrigen Messer eine geringfügig andere Position einnimmt als sie sie vor dem Nachschleifen- oder Nachschärfvorgang einnahm.

Die Erfindung ist nicht auf die im Detail näher erläuterte Ausführungsform beschränkt. Sie kann vielmehr in vielfacher Hinsicht innerhalb des durch die Ansprüche definierten Schutzbegehrens abgewandelt werden. Beispielsweise können die Tellerfedern entfallen wenn die übrigen Bauteile, insbesondere die Kupplungsteile von sich aus schon genug federn sollten. Außerdem können die Kupplungsteile punktsymmetrisch angefertigt sein. Ferner kann in dem Arm 24 mindestens ein Zapfen 52 befestigt sein, der in eine in die zweite Halteeinrichtung eingearbeitete Bohrung 53 eingreift, so daß die zweite Halteeinrichtung daran gehindert wird, eventuell zusammen mit dem Bearbeitungswerkzeug 19 zu rotieren. Außerdem kann neben der näher beschriebenen Führung 22 für den Arm 24 jegliche andersartige Führung verwendet werden, solange sie dazu in der Lage ist, das Bearbeitungswerkzeug zweckdienlich zu führen. Ferner sind die Teile 12, 21 und 20 vorzugsweise zu einer Baueinheit miteinander verbunden.

### Teileliste

- 1: Streifen
- 2: Bahn
- 3: Obermesser
- 4: Untermesser
- 5: Welle
- 6: Welle
- 7: Winkel
- 8: Schneidpunkt
- 9: Pfeil
- 10: Pfeil
- 11: Unterstützungseinrichtung
- 12: Achse
- 13: Lager
- 14: Wellenabsatz
- 15: Sicherungsring
- 16: Nabe
- 17: Ausdrehung
- 18: Sicherungsring
- 19: Bearbeitungswerkzeug
- 20: Seitenwand
- 21: zweites Kupplungsteil
- 22: Führung
- 23: Schlitten
- 24: Arm
- 25: Bohrung
- 26: Stufenbohrung
- 27: Zentrierteil
- 28: Bohrung
- 29: erstes Kupplungsteil
- 30: Paßfeder oder dgl.
- 31: Nut
- 32: geometrische Achse
- 33: Schwenkhebel
- 34: Schraube
- 35: Hülse
- 36: Mutter
- 37: Bohrung
- 38: Tellerfeder
- 39: Andrehung
- 40: Klaue
- 41: Lücke
- 42: Klaue
- 43: Sicherungsdeckel
- 44: Gewindebohrung
- 45: Schraube
- 46: Mutter
- 47: erster Freiraum
- 48: zweiter Freiraum
- 49: Stirnseite
- 50: Stirnseite
- 51: Maß
- 52: Zapfen
- 53: Bohrung

## Patentansprüche

1. Unterstützungseinrichtung mit einer an einem Maschinengestell befestigbaren ersten Halteeinrichtung (23 - 31, 33 - 41) und einer in diese einsetzbaren und an ihr verriegelbaren und von dieser trennbaren ein eine im wesentlichen kreisförmige Außenkontur aufweisendes Bearbeitungswerkzeug (19) drehbar unterstützende zweite Halteeinrichtung (12 - 18, 20 - 21), gekennzeichnet durch eine, in axialer Richtung des Bearbeitungswerkzeuges (19) verschieblich ausgeführte Unterstützung der zweiten Halteeinrichtung (12 - 18, 20 - 21) durch die erste Halteeinrichtung (23 - 31, 33 - 41) an nur einer Stirnseite (50) des Bearbeitungswerkzeuges (19), mindestens einen in axialer Richtung des Bearbeitungswerkzeuges (19) und zwischen der ersten (23 - 31, 33 - 41) und der zweiten (12 - 18, 20 - 21) Halteeinrichtung wirkenden Anschlag (45) und mindestens eine in axialer Richtung des Bearbeitungswerkzeuges (19) wirksam werdende Kraft entfaltende die erste (23 - 31, 33 - 41) und die zweite (12 - 18, 20 - 21) Halteeinrichtung aneinanderlegende, und dadurch die zweite Halteeinrichtung (12 - 18, 20 - 21) an der ersten Halteeinrichtung (23 - 31, 33 -41) verriegelnde Einrichtung (38).

2. Einrichtung nach Anspruch 1, gekennzeichnet durch ein mit der ersten Halteeinrichtung (23 - 31, 33 - 41) verbundenes, in axialer Richtung des Bearbeitungswerkzeuges (19) verschiebliches erstes Kupplungsteil (29) und ein mit der zweiten Halteeinrichtung (12 - 18, 20 - 21) verbundenes zweites Kupplungsteil (21).

3. Einrichtung nach Anspruch 2, dadurch gekennzeichnet, daß das erste (29) und das zweite (21) Kupplungsteil der das erste (29) und das zweite (21) Kupplungsteil enthaltenden Kupplung mindestens im geschlossenen Zustand der Kupplung einander konzentrisch sind.

4. Einrichtung nach Anspruch 2, dadurch gekennzeichnet, daß das erste (29) und das zweite (21) Kupplungsteil gegeneinander verdrehbar und miteinander verbindbar und im geöffneten Zustand der Kupplung in axialer Richtung des Bearbeitungswerkzeuges (19) gegeneinander bewegbar und voneinander lösbar sind.

5. Einrichtung nach einem der Ansprüche 2 bis 4, dadurch gekennzeichnet, daß das erste Kupplungsteil (29) unter Zwischenschaltung eines verdrehbaren Zentrierteiles (27) an der ersten Halteeinrichtung (23 - 31, 33 - 41) verdrehbar befestigt ist.

6. Einrichtung nach Anspruch 5, dadurch gekennzeichnet, daß das erste Kupplungsteil (29) gegenüber dem Zentrierteil (27) in axialer Richtung des Bearbeitungswerkzeuges (19) verschiebbar und mit dem Zentrierteil (27) gemeinsam verdrehbar mit dem Zentrierteil (27) verbunden ist.

7. Einrichtung nach einem der Ansprüche 2 bis 4, gekennzeichnet durch mindestens eine in axialer Richtung des Bearbeitungswerkzeuges (19) wirksam werdende, das erste (29) und das zweite (21) Kupplungsteil gegeneinanderdrückende Feder (38).

8. Einrichtung nach einem der Ansprüche 2 bis 4, dadurch gekennzeichnet, daß das erste (29) und das zweite (21) Kupplungsteil im wesentlichen jeweils punktsymmetrisch und abwechselnd mit Klauen und Lücken versehen sind.

9. Einrichtung nach Anspruch 8, dadurch gekennzeichnet, daß die Lücken (41) des einen Kupplungsteils größer sind als die entsprechenden Klauen (42) des anderen Kupplungsteils.

## Claims

1. Supporting device, having a first holding device (23 - 31, 33 - 41), which is securable to a machine frame, and a second holding device (12 - 18, 20 - 21) which is insertable thereinto and is lockable thereto and separable therefrom and rotatably supports a working tool (19) having a substantially circular outer contour, characterized by a support of the second holding device (12 - 18, 20 - 21) by the first holding device (23 - 31, 33 - 41) at only one end side (50) of the working tool (19), said support being designed to be displaceable in the axial direction of the working tool (19), by at least one stop (45), acting in the axial direction of the working tool (19) and between the first (23 - 31, 33 - 41) and the second (12 - 18, 20 - 21) holding devices, and by at least one force-developing device (38) coming into action in the axial direction of the working tool (19) and bringing the first (23 - 31, 33 - 41) and the second (12 - 18, 20 - 21) holding devices to bear against one another and thereby locking the second holding device (12 - 18, 20 - 21) to the first holding device (23 - 31, 33 - 41).

2. Device according to Claim 1, characterized by a first coupling part (29), connected to the first holding device (23 - 31, 33 - 41) and displaceable in the axial direction of the working tool (19), and a second coupling part (21) connected to the second holding device (12 - 18, 20 - 21).

3. Device according to Claim 2, characterized in that the first (29) and the second (21) coupling parts of the coupling containing the first (29) and the second (21) coupling parts are mutually concentric at least in the engaged state of the coupling.

4. Device according to Claim 2, characterized in that the first (29) and the second (21) coupling parts are rotatable with respect to one another and connectable to one another and, in the disengaged state of the coupling, are movable with respect to one another in the axial direction of the working tool (19) and are detachable from one another.

5. Device according to one of Claims 2 to 4, characterized in that the first coupling part (29), with the interposition of a rotatable centring part (27), is rotatably secured to the first holding-device (23 - 31, 33 - 41).

6. Device according to Claim 5, characterized in that the first coupling part (29) is displaceable with respect to the centring part (27) in the axial direction of the working tool (19) and is connected to the centring part (27) in a manner such that it is rotatable together with the centring part (27).

7. Device according to one of Claims 2 to 4, characterized by at least one Spring (38) coming into action in the axial direction of the working tool (19) and pressing the first (29) and the second (21) coupling parts against one another.

8. Device according to one of Claims 2 to 4, characterized in that the first (29) and the second (21) coupling parts are substantially each provided point-symmetrically and alternately with dogs and gaps.

9. Device according to Claim 8, characterized in that the gaps (41) of one coupling part are larger than the corresponding dogs (42) of the other coupling part.

## Revendications

1. Dispositif support comportant un premier dispositif de maintien (23 - 31, 33 - 41) pouvant être fixé sur un bâti de machine et un deuxième dispositif de maintien (12 - 18, 20 - 21) pouvant être installé dans ce dernier et être verrouillé sur lui et être séparé de lui, servant de support tournant pour un outil d'usinage (19) présentant un contour extérieur circulaire, caractérisé par un support pour le deuxième dispositif de maintien (12 - 18, 20 - 21), réalisé pour pouvoir coulisser, dans la direction axiale de l'outil d'usinage (19) avec le premier dispositif de maintien (23 - 31, 33 - 41), sur seulement une face d'attaque (50) de l'outil d'usinage (19), par au moins une butée (45) agissant dans la direction axiale de l'outil d'usinage (19) et située entre le premier dispositif de maintien (23 - 31, 33 - 41) et le deuxième dispositif de maintien (12 - 18, 20 - 21), et par au moins un dispositif (38) placé à la fois contre le premier dispositif de maintien (23 - 31, 33 - 41) et le deuxième dispositif de maintien (12 - 18, 20 - 21) et développant une force agissant dans la direction axiale de l'outil d'usinage (19), ce dispositif (38) verrouillant ainsi le deuxième dispositif de maintien (12 - 18, 20 - 21) sur le premier dispositif de maintien (23 - 31, 33 - 41).

2. Dispositif suivant la revendication 1, caractérisé par une première pièce d'accouplement (29), reliée au premier dispositif de maintien (23 - 31, 33 - 41) et pouvant coulisser dans la direction axiale de l'outil d'usinage (19), et par une deuxième pièce d'accouplement (21) reliée au deuxième dispositif de maintien (12 - 18, 20 - 21).

3. Dispositif suivant la revendication 2, caractérisé en ce que la première pièce d'accouplement (29) et la deuxième pièce d'accouplement (21) de l'accouplement comprenant la première (29) et la deuxième (21) pièce d'accouplement sont concentriques l'une par rapport à l'autre, au moins quand l'accouplement est en prise.

4. Dispositif suivant la revendication 2, caractérisé en ce que la première (29) et la deuxième (21) pièce d'accouplement peuvent tourner l'une en sens contraire de l'autre et peuvent être raccordées l'une avec l'autre, et en ce que, quand l'accouplement est ouvert, elles peuvent se déplacer l'une en sens contraire de l'autre, dans la direction axiale de l'outil d'usinage (19), et peuvent se séparer l'une de l'autre.

5. Dispositif suivant l'une des revendications 2 à 4, caractérisé en ce que la première pièce d'accouplement (29) est fixée, de façon à pouvoir tourner, au premier dispositif de maintien (23 - 31, 33 - 41), par un accouplement intermédiaire d'une pièce de centrage (27) pouvant tourner.

6. Dispositif suivant la revendication 5, caractérisé en ce que la première pièce d'accouplement (29) peut coulisser par rapport à la pièce de centrage (27) dans la direction axiale de l'outil d'usinage (19), et est reliée à la pièce de centrage (27) de façon à pouvoir tourner ensemble avec la pièce de centrage (27).

7. Dispositif suivant l'une des revendications 2 à 4, caractérisé par au moins un ressort (38) agissant dans la direction axiale de l'outil d'usinage (19) et appuyant l'une contre l'autre la première (29) et la deuxième pièce d'accouplement (21).

8. Dispositif suivant l'une des revendications 2 à 4, caractérisé en ce que la première (29) et la deuxième pièce d'accouplement (21) sont chacune essentiellement symétriques par rapport à un point et sont munies de crabots et d'évidements alternant les uns avec les autres.

9. Dispositif suivant la revendication 8, caractérisé en ce que les évidements (41) de l'une des pièces d'accouplement sont plus grands que les crabots correspondants (42) de l'autre pièce d'accouplement.
